# EUROPEAN PATENT APPLICATION

(11) **EP 1 110 459 A1**
(43) Date of publication of application: **27.06.2001**
(21) Application number: 99830790.4
(22) Date of filing: 22.12.1999
(51) Int. Cl.: A23G 1/00, A23G 3/00, A23G 7/00

(54) **A method of manufacturing a food product**

(71) Applicant: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt am Main (DE)
(72) Inventor: Constantini Maurizio, I-12051 Alba (Cuneo) (IT)
(74) Representative: Rambelli, Paolo

(57) **Abstract**

The method enables food products (1) to be manufactured which include two half-shells (V1, V2) with their respective mouth portions (B1, B2) coupled together. The products (U) contain an accessory element (1) occupying an inner volume enclosed in a wrapper.

The method includes the steps of:
- coupling the said half-shells (V1, V2) by arranging the said mouth portions (B1, B2) in a condition of substantially free coupling, by establishing a temporary adhesive connection (10, 11) between the said accessory element (1) and the said half-shells (V1, V2) acting to hold them together,
- wrapping the thus coupled half-shells (V1, V2) in a wrapper while the said half-shells (V1, V2) are held together by the temporary adhesive connection to the said accessory (1).

## Description

The present invention relates, in general, to the problem of manufacturing food products according to the preamble to Claim 1.

Products of this type are known in the art: it is sufficient to cite, for example, the products sold under the brand name "Uovo Kinder" by companies of the Ferrero group. Such products are operable to enclose containers intended to house so-called "surprises": see, for example, the arrangement described in document WO-A-93/00267 and prior art documents cited therein.

In particular, a process is known from document US-A-3 961 089 which enables a product of this type to be made up of two complementary half-shells joined together around their respective mouth portions. A substantially similar end result, with the half-shells joined together around their mouth portions, could also be achieved by other methods, for example by locally softening the material constituting the half-shells around the mouth portions. Once the mouth portions are softened, they are fitted together and bond together as the material cools and solidifies.

The aforesaid products are generally intended to be wrapped in a sheet material (aluminium foil, for example), by various methods known in the art. The conditions under which such products are eaten generally involve the wrapper being removed, in one piece or in successive stages, with the product then being opened and eaten. In many cases, the opening of the product is a separate act which takes place well before it is eaten; typically, this occurs when the person who buys or is given the product (most often a child) wants to open the product to reach the surprise it encloses, preferably inside an associated container.

It may not be easy to open the product, with the operation very often leading to its breaking inadvertently, with parts and fragments being dispersed.

The object of the present invention is to provide a solution to such problems, without any detrimental effects on the usual manner of handling the product.

This object is achieved according to the present invention by a method having the characteristics specifically claimed in the Claims which follow.

The invention also relates to a product which can be manufactured by the aforesaid method.

In general terms, the invention is based on the recognition that in conventional products (see, for example, the product illustrated in the document US-A 3 961 089) the need for the half-shells constituting the product is dictated primarily by the need to ensure that the product retains its coherence while it is being wrapped: by the need, in other words, to prevent the product from coming apart while it is being enclosed in the wrapping.

This requirement is not really felt at the time of consuming the product, when the fact of having to open or break a closed product in order to eat it is often a nuisance.

For this reason, the aim of the invention, in general terms, is to provide a food product which, as presented to the consumer, is constituted by at least two parts coupled together substantially freely (the significance of this phrase will be explained later) and thus held together by the wrapper whereby, when the wrapper is removed, the said parts can easily be separated, with no risk of breakage or dispersal.

The invention will now be described, purely by way of non-limitative example, with reference to the appended drawings, in which:
- Figure 1 schematically illustrates the structure of a product to which the present invention is applicable;
- Figures 2 and 3 illustrate the possible appearance of an accessory element which could be inserted into a product of the invention;
- Figures 4 to 7 schematically illustrate the successive steps in a possible way of performing the method of the invention; and
- Figure 8 shows the result which can be achieved by the aforesaid method, at the time of being eaten.

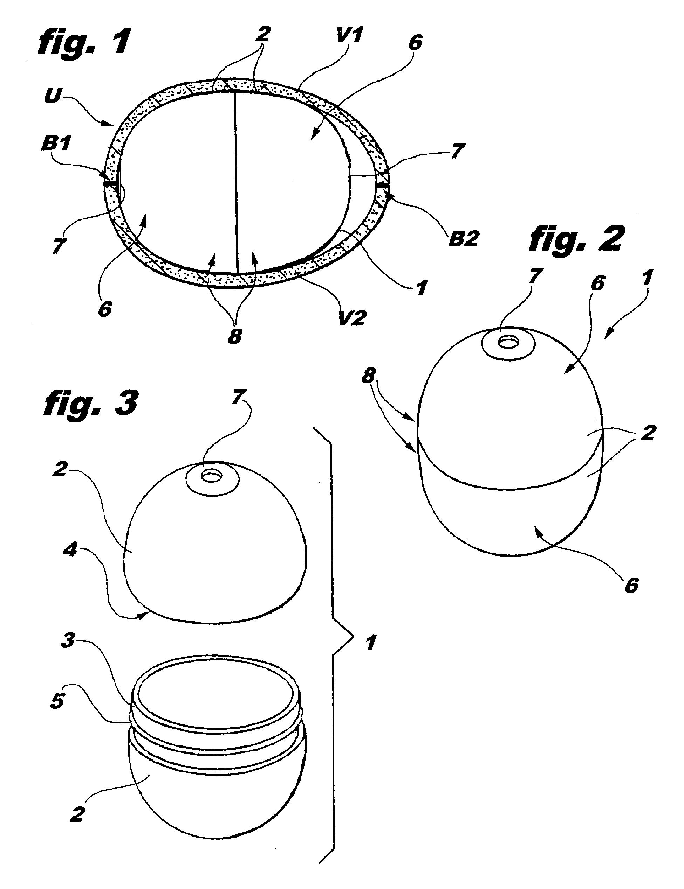

In Figure 1, a food product generally indicated U is constituted, in the embodiment illustrated here by way of example, by two half-shells V1 and V2 of an edible material such as chocolate which can be coupled by their respective mouth portions B1 and B2 so as to form a hollow casing of edible material. This casing is operable to hold a so-called "surprise" inside it, possibly arranged in a respective container indicated 1. The item is substantially similar, in other words, to the egg-shaped food product sold under the brand name "Uovo Kinder" by companies of the Ferrero group.

From the description which follows, it will be clear to anyone working in this field that the invention is in no way limited to the manufacture of products having this specific structure.

Without wishing to supply an exhaustive picture of the possibilities, it is immediately clear that variations in the characteristics of the product be envisaged, with the following among other, being involved:
- the shape of the product: it is clear that there is no compulsory shape for the product U, which could be spherical, ellipsoid, prismatic and the like;
- the equality or symmetry of the parts making up the body of the product: in the example to which Figure 1 refers, the shape and dimensions of the two half-shells V1 and V2 are identical; however, the arrangement of the invention is also applicable to products not meeting this condition: one could imagine, as an example, a product which is substantially similar in its finished form to that shown in Figure 1 but, instead of being made up of two half-shells with mouth portions B1 and B2 which extend and are coupled in a "polar" plane of the casing, are made up of one roughly semi-spherical part and one ogural-shaped part, with their mouth portions lying and coupled in an "equatorial" plane of the casing;
- the number of parts making up the product: it is immediately clear that the description which follows could be applied in exactly the same way to an egg-shaped product constituted, instead of by two half-shells, by two pairs of parts (that is by four overall) with each pair constituting together one of the said half-shells V1, V2;
- the structural characteristics of the body of the product: for example, the casing of the "Uovo Kinder" mentioned earlier has a layered structure with an outer layer of chocolate and an inner one of milk based cream; it is entirely clear that such variations do not affect the specific theme of the invention; and
- the nature of the container of the accessory element 1: as will be explained in more detail below, this element can be constituted by the "surprise" itself and/or possibly be made, all or in part, of an edible material.

For the sake of clarity, it should also be emphasized that the detailed description which follows is essentially divided into two parts.

The first part gives a detailed description of a possible embodiment of the container ("barrel") 1.

The second part, on the other hand, illustrates the possible use of the aforesaid container 1 in the context of a particular method for enclosing the product U in a wrapper of sheet material (possibly an edible material) without the need to weld together the half-shells V1, V2 of which it is composed.

It will be clear from this description that:
- on the one hand, although it is particularly well suited to use in the aforesaid method, the "barrel" 1 is not univocally intended for use in carrying out this method: in other words, the container 1 could also be used to advantage (in particular with regard to making maximum use of the relative volume as a container) together with products in which the half-shells V1 and V2 do need to be welded together, and
- on the other hand, the method of the invention could also be carried out using conventional barrels, for example of the type described in WO-A-93/00267 and in the prior art documents cited in this document.

Moving on to a detailed description of the container 1, it should be pointed out that it is substantially constituted by two cup-shaped bodies 2, preferably moulded from a plastics material, intended to be coupled frontally by means of a cylindrical collar 3 present on one of the two bodies 2 intended to be fitted into the mouth portion 4 of the other body 2.

In order to ensure that the two bodies 2 are securely coupled, an annular rib 5 is formed on the outer surface of the collar 3 for snap-engaging a corresponding annular groove (not shown in the drawings) formed in the inner wall of the mouth portion 4 of the other body 2.

The container 1 is preferably prepared by inserting the so-called surprise (a toy, item of jewellery, trinket or the like) into one of the bodies 2 (preferably the one with the collar 3), then snap-engaging the other body 2 onto the body enclosing the surprise.

At this point, the container 1 is ready to be inserted into an item such as the chocolate egg U shown in Figure 1: this could be, for example, a chocolate egg of about the same dimensions as a real hen's egg. As stated earlier, a chocolate egg of this type (with a layered wall having a chocolate outer layer and a milk based cream inner layer) is sold under the brand name "Uovo Kinder" by companies of the Ferrero group.

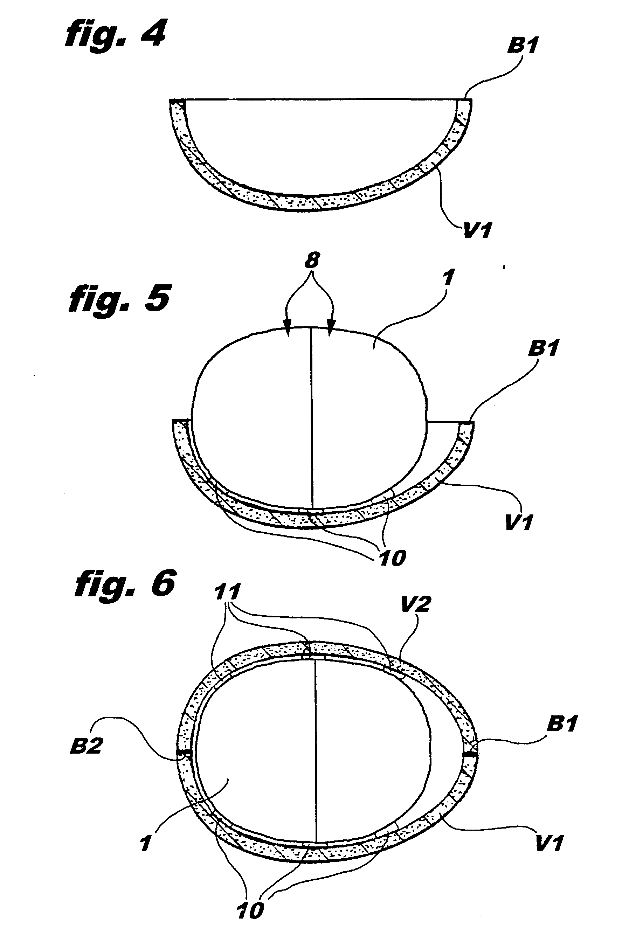

The perspective view of Figure 2 (and especially the side elevation of Figure 1, which schematically illustrates the position of the container 1 in the egg U) shows that each of the bodies 2 can be seen to have a cap-shaped end 6 which is generally hemispherical (except for a slight flattening at the polar zone 7 which is best seen in figures 2 and 3) and a sleeve portion 8 which is slightly enlarged. This final characteristic, the reasons for which will become clearer later, distinguishes the container shown here from that illustrated in WO-A-93/00267.

It is preferred to form the sleeve portion 8 with a convex (or rounded) outline along its entire, or substantially its entire length, for reasons which will become apparent later. However, the container 1 could also be made, though this would not be a preferred choice, so that in the assembled container 1 each sleeve portion 8, or the unit formed by the two together, was convex and/or rounded along only a part of its length, as a result, for example, of the presence of one or more rings projecting from a surface which was cylindrical or substantially cylindrical.

In order to give an idea of dimensions (with reference to an embodiment which should in no way be seen as limitative) the radius of the cap portions 6 is around 20mm, meaning that the diameter of the base of the cap is around 40mm. The convex nature of the sleeve portions 8 means that the diameter of these parts of the container 1 is about 40.5-45mm.

As to the relative height of the cap portions and the sleeve portions 8 (height measured axially with regard both to the bodies 2 and the overall container 1), the two end caps 6 take up around 36-39mm of the total length of the closed container (around 47mm), while the remaining 11-8mm are taken up by the central portion, constituted by the two sleeve portions 8 coupled together. The container 1 was referred to as closed since in this condition the collar 3 is hidden inside the container 1 itself and does not affect the dimensions thereof.

The specific choices of shape and dimensions described above offer two main advantages:
- for the same internal dimensions of the receptacle product (in the embodiment illustrated the egg U) the shape of the container 1 gives the container 1 a maximum diameter (especially in the convex central portion formed by the two sleeve portions 8 coupled together): this means, on the one hand that the container 1 can hold a fairly large "surprise", in particular a small toy or trinket, without the need to use unassembled items intended to be assembled by the consumer (it should be pointed out that, when it is made of a plastics material for food products, the wall of the container is so thin it takes up virtually no space), and on the other that the risk of anyone accidentally swallowing the container 1 is reduced,
- the presence of any sharply curved parts is avoided, thereby reducing the risk of damaging the internal surface of the product U, even when this is still quite soft (for example chocolate which has still not completely cooled); the risk of damage is also kept to a minimum in the case of adhesion between the container 1 and the walls of the hollow body U.

With regard to this last point, the possibility of the container 1 adhering, even quite securely, to the inner wall of the body U has been usually particularly seen by the Applicant as a problem to be overcome. This was especially true for the arrangement described in US-A-3 961 089 where the two half-shells V1, V2 constituting a product such as the product U illustrated in Figure 1, are coupled in such a way that the inner layer of the half-shell V1, which is arranged in the upper position, drips down to bond with the same layer of the half-shell V2 arranged in the lower position; the mass of material dripping down also tends to drip onto the container 1 which is possibly arranged in the product U.

The adhesive connection which is established between the container 1 and the inner surface of the product U when the aforesaid material solidifies, thus bonding the half-shells V1 and V2, is a disadvantage for at least two reasons:
- first, because the said connection makes it more difficult to open the product P, making it more likely to break and for its parts to be dispersed, and
- secondly, because the aforesaid material tends in any case to remain on the container 1, which, when removed from the product U is found to have its surface contaminated by the material that had adhered thereto.

This explains why arrangements such as that described in WO-A-93/00267, and in earlier documents cited therein, have opted to give the container 1 a shape intended to minimize, as far as possible, the surfaces which could come into contact with the inner surface of the product U.

The embodiment of the container 1 shown in the appended drawings goes the other way, that is by increasing as much as possible the surfaces of the container 1 which could come into contact with the inner surface of the product U.

This is because the method illustrated in Figures 4 to 8 exploits the possibility of adhesive connection of the container 1 to the half-shells V1, V2 (a phenomenon considered to be a disadvantage in the prior art) so as to avoid the need to weld the half-shells V1, V2 around their facing mouth portions B1, B2.

In particular, the sequence of drawings from 4 to 8 illustrates successive steps in the manufacture and consumption of a product such as the product U which has already been extensively referred to.

In particular, Figures 4 to 8 refer specifically to a sequence of operations aimed at establishing the relative positions of the parts involved.

These parts (half-shells V1, V2, sheet wrapper P and the like) are formed according to criteria which are well known in the art and thus do not require any detailed description here. This also applies to the handling and processing equipment involved in the steps illustrated here.

In particular, the sequence of Figures 4 and 5 shows the arrangement of the container 1, inside one of the half-shells of the product, such as the half-shell V1.

To this end, the method of the invention provides for one or more areas of adhesive connection 10 (formed according to criteria which will be better illustrated later) able to provide a connection between the outer surface of the container 1 and the inner surface of the half-shell V1.

The half-shell V2 is subsequently coupled frontally to the half-shell V1, once again with the provision of areas 11 of adhesive connection between the outer surface of the container 1 and the inner surface of the half-shell V2.

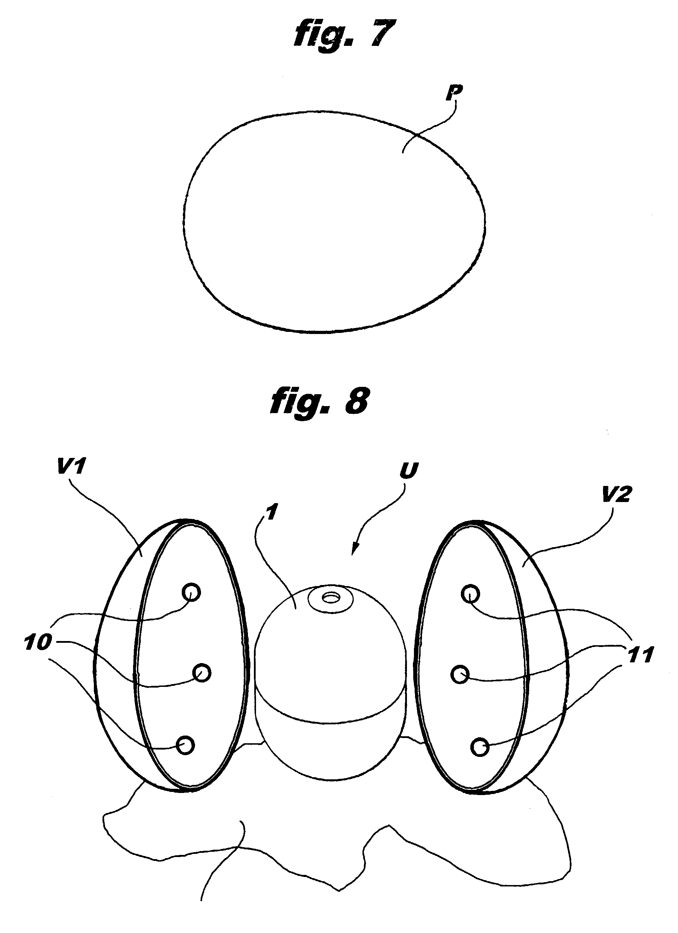

It will be appreciated that the frontal coupling movement illustrated in Figure 6 to couple the half-shell V2 onto the half-shell V1, that is by lowering it vertically into place, can be carried out with the parts in any orientation, for example with the mouth portions B1, B2 lying in a vertical or generally inclined plane.

One important aspect of the method of the invention lies in the fact that no substantial adhesive connection (such as welding, for example) is provided between the portions B1, B2 which are therefore coupled substantially freely. The stable connection between the half-shells V1 and V2 which is required to hold the product 1 together while it is subsequently wrapped in a sheet material P (Figure 7) is in fact ensured by the adhesive connection of each half-shell V1, V2 with the container 1 arranged inside them as an accessory element.

The coupling has been described as "substantially" free because it cannot be ruled out that, under certain environmental conditions and/or in dependence on the material constituting the half-shells V1, V2 (for example, at a temperature warm enough to soften the material or the materials constituting the half-shells V1, V2), some adhesion might occur between the mouth portions B1, B2. Any adhesion, however, would be weak, and might often diminish over time (as the materials harden, for example) and would, in any case not establish a strong enough connection between the half-shells V1, V2 to hold the product 1 together during the subsequent wrapping operation.

Those skilled in the art will easily see that the phenomena described above are easily identifiable and recognisable, even during experimental work.

In particular, the fact that the half-shells V1, V2 are held together so as to keep the product 1 in one piece during wrapping operations mainly by adhesion of each half-shell V1, V2 to the container 1 (despite a weak connection between the mouth portions B1, B2) can be verified experimentally very easily by making two products U which are identical in every respect except that one has the areas of adhesion 10, 11 and the other does not and then by observing that the first product remains in one piece during the wrapping operation, while the other does not.

On the other hand, the strength or intensity of the connection required between each half-shell V1, V2 and the container 1 cannot be defined in absolute terms. The degree of resistance needed to ensure that the product 1 remains coherent can depend on the strength of the forces to which the product 1 is subjected during the wrapping operation.

In particular, the required degree of strength is minimal in a case where, for example, the product U is simply lifted and deposited into a wrapper constituted by a pre-formed container (a wrapper, for example, constituted by two pre-formed half-shells of wrapping material which are to be sealed around their respective mouth portions). The required degree of strength is much higher if the stress on the product U is to be greater during the wrapping operation (if, for example, it is to be introduced into a packaging machine using aluminium foil, such as are in current use in the confectionery industry for packaging Easter eggs).

In any case, a technical expert will be able to verify by means of a simple test if the degree of strength is sufficient or not.

As stated earlier, the operation which consists in wrapping the product U in a wrapper P, and is illustrated schematically in Figure 7, may be carried out using a wide variety of methods (known in the art and thus not requiring a detailed description here) in dependence, for example, on the type of wrapping P to be used.

One salient characteristic of the method of the invention lies in the fact that the adhesion areas 10, 11 are formed so as not to be permanent: they are intended to lose their effectiveness once the product U is arranged in the wrapper P.

In other words, the function of the adhesion areas 10, 11 is to "tack" the product U together, in order to avoid having to weld the mouth portions B1, B2 as was found necessary in the prior art in order to be able to wrap the product U itself.

On the other hand, since the said adhesive connections may be seen as "tacking" the product together, they are intended to reduce over time (that is before the product U reaches the consumer).

The consumer is thus able to eat the product as illustrated schematically in Figure 8. Once all or part of the wrapper 8 has been removed (it is implicitly supposed here that the wrapper is constituted simply by aluminium foil), the consumer will find a product U which, to all intents and purposes, opens by itself: the half-shells V1, V2, which were coupled substantially freely (that is, at most by some adhesion of the mouth portions B1, B2) tend to come apart simply due to the fact that the product U is rested on a flat surface or, at most, by the slightest stress pulling them apart, thereby giving access to the container 1. In addition, the container 1 will not be spoilt by the remains of the adhesion areas 10, 11, which will, at most, have left only traces on the inner surfaces of the half-shells V1, V2. In this way, all the problems mentioned in the introduction to this description are radically solved.

With regard to the formation of the adhesion areas 10, 11, various methods are possible, which substantially involve two basic requirements:
- the use of an edible adhesive which gradually loses its adhesive property to form the areas 10, 11 and/or
- the treatment of the product U, once arranged in the wrapper P, in a manner designed to reduce the effect of the adhesion between the half-shells V1, V2 and the container 1 in the areas 10, 11.

It will also be appreciated that these two requirements can be met either individually or together.

With regard to the possible treatment of the product U once wrapped in the wrapper P, the most immediate solution would be to use vibration.

This solution is suitable, for example, if the adhesion areas 10, 11 are intended to be formed by the material forming the inner layer of the half-shells V1, V2.

For example, tests carried out by the Applicant have demonstrated that the milk based cream currently used to form the inner layer of the product sold under the name "Uovo Kinder" by companies of the Ferrero group and which is made of the following ingredients:

| | |
|---|---|
| Saccharose | 30 to 40% |
| Total fats | 30 to 40% |
| Milk powder | 30 to 40% |

is able, in the conditions immediately after it has been prepared (that is at the end of a draining operation, when the temperature of the layer is substantially between 24 and 28°C), to provide sufficient adhesive force to ensure that the half-shells V1, V2 are securely held together during the subsequent step of wrapping the product U in a wrapper of aluminium foil in a normal packaging machine within about 25 minutes from the formation of the said inner layer. This is provided that the contact surface between the container 1 and the inner walls of the half-shells V1, V2 be around 1.5 cm² (the area for each half-shell). This value is easily achieved with a container 1 of the dimensions given earlier by way of example.

Once the product wrapped in the wrapper P has been stabilized at ambient temperature (20° C), a vibration treatment carried out for around 20 seconds with a small electric motor at 1,500 RPM and eccentricity of 1.5 mm ensures that the container 1 is cleanly detached from the walls of the half-shells V1, V2 and thus that the adhesion areas 10, 11, which were holding the said half-shells together inside the wrapper P, are broken.

Tests were also carried out on the possibility of forming the adhesion areas 10, 11 with additional material deposited on the inner walls of the half-shells V1, V2 and/or on the outer surface of the container 1. Tests carried out by the Applicant have indicated the possibility of choosing the edible adhesive from the group comprising the hydrocolloids.

Edible hydrocolloids suitable for use as an adhesive include particularly alginic acid, alginates, agar-agar, carrageen, carob flour, guar flour, tragacanth gum, gum arabic, xanthan gum, karaya gum, pectin (amidated or non-amidated pectins) microcrystalline or powdered cellulose, methylcellulose, hydroxypropylcellulose, hydroxypropylmethylcellulose, methylethylcellulose, carboxymethylcellulose, dextrins, fluid starches, phosphate starch, starch diphosphate, starch acetate, starch adipate and mixtures thereof.

This range of choice should not be seen as exclusive, since it would be possible to use other edible adhesives having rheological and/or adhesive characteristics.

An appropriate choice of adhesive, which should also depend on the nature of the surface of the accessory element, which one skilled in the art could select after only a few trials, can enable adhesion areas 10, 11 to be formed which break after a short period of time without it being necessary to perform any additional operation (vibration, for example) on the wrapped products.

It is clear from the above that, while it is preferable to use a container 1 having the characteristics described earlier with reference to Figures 1 to 3, (especially with a view to ensuring that a large surface of the container 1 is exposed to the internal walls of the half-shells V1, V2) such a choice is not compulsory. The method of the invention is in fact suitable for use with containers 1 of other types, such as those currently used in the "Uovo Kinder" products mentioned several times hereinabove. Naturally, the use of containers 1 having a different shape and/or their use with products U of different shape (and dimensions) from those explicitly referred to above, could mean that more adhesive may need to be used to form the areas 10, 11 and/or that the container 1 may need to be specially positioned inside the product U (in order, for example, to ensure that the half-shells V1, V2 are effectively coupled by means of the container 1 and the adhesion areas 10, 11).

In the same way, it will be recalled that, as stated earlier, the container 1 described earlier could also be used to advantage with products U which were manufactured without recourse to tacking areas 10, 11 as described earlier.

It will also be appreciated that, while the description of the method shown in Figures 4 to 8 was given on the assumption that the half-shells were connected by means of the container 1, which in turn contained a gift item such as a small toy or a trinket or the like (this being the arrangement preferred in the industry), the same technical effect could be achieved by using the gift item itself. To give an example, the accessory element could be constituted, for example, by a toy such as a toy animal, perhaps an animal with a rounded body such as a little pig or an elephant. In such a case, or in a functionally similar situation, it would be superfluous to place the item in a container such as the container 1. The tacking action could be provided by forming the areas 10, 11 directly on the body of the animal.

In the cases described earlier, it was also implicitly supposed that the container 1 and/or the article constituting the "surprise" used to tack together the two half-shells V1, V2 were not of an edible material (in particular, it was stated that that the container 1 would preferably be made of a plastics material) . This choice is in no way compulsory, however, since the container 1 and/or its contents could be made of an edible material, an arrangement which would mean that the said material could be used to form the tacking areas 10, 11.

Naturally, the principle of the invention remaining unchanged, manufacturing details and embodiments can vary widely from those described and illustrated, without departing thereby from the scope of the present invention as defined in the appended Claims.

## Claims

1. A method of manufacturing a food product (U) which comprises two half-shells (V1, V2) with their respective mouth portions (B1, B2) coupled together, the said half-shells (V1, V2) containing an accessory element (1) and being enclosed in a wrapper (P), characterised in that it includes the steps of:
- coupling the said half-shells (V1, V2) by arranging the said mouth portions (B1, B2) so that they are substantially freely coupled, forming a temporary adhesive relationship (10, 11) between the said accessory element (1) and the said half-shells (V1, V2), so as to hold the said half-shells (V1, V2) together, and
- enclosing the said thus coupled half-shells (V1, V2) in the said wrapper (P) while the half-shells (V1, V2) are held together by the said temporary adhesion to the said accessory (1).

2. A method according to Claim 1, characterised in that it includes the step of subjecting the product (1), once it has been wrapped in the wrapper (P), to a treatment that will break the adhesive connection between the said half-shells (V1, V2) and the accessory element (1).

3. A method according to Claim 2, characterised in that the said operation is a vibration treatment.

4. A method according to any of the preceding Claims, characterised in that the said temporary adhesive connection (10, 11) is established with an edible adhesive which will lose its adhesive properties over a period of time.

5. A method according to any preceding Claim, characterised in that the said temporary adhesive connection (10, 11) is formed with the use of the material constituting the half-shells (V1, V2).

6. A method according to any preceding Claim, characterised in that the said temporary adhesive connection (10, 11) is formed with the use of material constituting the accessory element (1).

7. A method according to Claim 4, characterised in that the said adhesive connection is formed with the use of an edible adhesive chosen from: alginic acid, alginates, agar-agar, carrageen, carob flour, guar flour, tragacanth gum, gum arabic, xanthan gum, karaya gum, pectin (amidated or non-amidated pectins), microcrystalline or powdered cellulose, methylcellulose, hydroxypropylcellulose, hydroxypropylmethylcellulose, methylethylcellulose, carboxymethylcellulose, dextrins, fluid starches, phosphate starch, diphosphate starch, starch acetate, starch adipate and mixture thereof.

8. A method according to any preceding Claim, characterised in that it includes the step of forming the said half-shells (V1, V2) and the said accessory element (1) so that the respective surface parts thereof (8; V1, V2) are facing each other in close proximity.

9. A method according to any one of the preceding Claims, characterised in that the said accessory element is a container (1).

10. A method according to any one of the preceding Claims, characterised in that the said half-shells (V1, V2) and the said accessory (1) are both substantially egg-shaped.

11. A product obtainable by the method according to any one of the preceding Claim 1 to 10, characterised in that it includes, once the temporary adhesion has broken:
- the said half-shells (V1, V2) coupled substantially freely by their respective mouth portions (B1, B2) and held together by the wrapper (P), and
- the said accessory element (1) arranged inside the said half-shells (V1, V2) without any adhesive connection between the said half-shells (V1, V2), the arrangement being such that, once the wrapper (P) is removed, the said half-shells (V1, V2) are easily separated so as to gain access to the said accessory element (1).

12. A container for surprises and similar articles intended to be inserted into hollow food products (U), in particular for use in the method according to any of Claims 1 to 9, which includes two cup-shaped bodies (2) which can be coupled facing each other (3, 5), with each body including a cap-shaped bottom portion (6) and a sleeve portion (8) for coupling with the equivalent sleeve portion (8) of the other body (2) and in which the said cap-shaped portions (6) are generally hemispherical, characterised in that the said sleeve portions (8) coupled together define the central portion of a generally convex container.

13. A container according to Claim 12, characterised in that the said sleeve portions (8) are shaped in such a way that the said convexity is present along substantially the entire central portion of the container (1).

14. Use of a container according to Claims 12 or 13 as an accessory element for connecting two half-shells (V1, V2) during the production of a food product according to Claim 11.
